(19) **Europäisches Patentamt**
**European Patent Office**
**Office européen des brevets**

(11) **EP 3 692 409 B1**

(12) **EUROPÄISCHE PATENTSCHRIFT**

(45) Veröffentlichungstag und Bekanntmachung des Hinweises auf die Patenterteilung:
**24.08.2022 Patentblatt 2022/34**

(21) Anmeldenummer: **18780065.1**

(22) Anmeldetag: **25.09.2018**

(51) Internationale Patentklassifikation (IPC):
**G02B 21/00** (2006.01)   **G02B 27/58** (2006.01)
**G01N 21/64** (2006.01)

(52) Gemeinsame Patentklassifikation (CPC):
**G02B 21/0076; G01N 21/6458; G02B 21/0036; G02B 21/0072; G02B 21/008; G02B 27/58**

(86) Internationale Anmeldenummer:
**PCT/EP2018/075991**

(87) Internationale Veröffentlichungsnummer:
**WO 2019/068519 (11.04.2019 Gazette 2019/15)**

(54) **KONFOKALMIKROSKOP MIT HOHER AUFLÖSUNG**

HIGH-RESOLUTION CONFOCAL MICROSCOPE

MICROSCOPE CONFOCAL À GRANDE RÉSOLUTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2017 DE 102017122858**

(43) Veröffentlichungstag der Anmeldung:
**12.08.2020 Patentblatt 2020/33**

(73) Patentinhaber: **Carl Zeiss Microscopy GmbH**
**07745 Jena (DE)**

(72) Erfinder:
• **BATHE, Wolfgang**
  **07743 Jena (DE)**
• **KALININ, Stanislav**
  **99427 Weimar (DE)**

(74) Vertreter: **Patentanwälte Geyer, Fehners & Partner mbB**
**Perhamerstrasse 31**
**80687 München (DE)**

(56) Entgegenhaltungen:
**EP-A1- 2 317 362       EP-A2- 2 860 566**
**DE-A1-102015 111 702**

• **Klaus Weisshart: "The Basic Principle of Airyscanning", , 31. Juli 2014 (2014-07-31), XP055508368, Gefunden im Internet: URL:https://www.embl.de/services/core_facilities/almf/events_ext/2017/EN_wp_LSM-880_Basic-Principle-Airyscan.pdf [gefunden am 2018-09-20]**

**Beschreibung**

Die Erfindung bezieht sich auf ein Verfahren zur hochauflösenden Scanning-Mikroskopie einer Probe, wobei die Probe mit Beleuchtungsstrahlung derart beleuchtet wird, dass die Beleuchtungsstrahlung an einem Punkt in oder auf der Probe zu einem beugungsbegrenzten Beleuchtungsfleck gebündelt wird, der Punkt beugungsbegrenzt in ein Beugungsbild auf einen Pixel aufweisenden Flächendetektor abgebildet wird, wobei der Flächendetektor durch seine Pixel eine Ortsauflösung aufweist, die eine Beugungsstruktur des Beugungsbildes auflöst, der Punkt relativ zur Probe in verschiedene Scanpositionen mit einer Schrittweite verschoben wird, die kleiner ist als der Durchmesser des Beleuchtungsflecks, der Flächendetektor ausgelesen und aus den Daten des Flächendetektors und aus den diesen Daten zugeordneten Scanpositionen ein 3D-Bild der Probe erzeugt wird, das eine Auflösung aufweist, die über eine Auflösungsgrenze der Abbildung gesteigert ist.

Die Erfindung bezieht sich weiter auf ein Mikroskop zur hochauflösenden Scanning-Mikroskopie einer Probe, das aufweist: einen Beleuchtungsstrahlengang zur Beleuchtung der Probe mit Beleuchtungsstrahlung derart, dass die Beleuchtungsstrahlung an einem Punkt in oder auf der Probe zu einem beugungsbegrenzten Beleuchtungsfleck gebündelt wird, einen Abbildungs- strahlengang zur beugungsbegrenzten Abbildung der Punkte in ein Beugungsbild auf einen Pixel aufweisenden Flächendetektor, wobei der Flächendetektor durch seine Pixel eine Ortsauflösung aufweist, die eine Beugungsstruktur des Beugungsbildes auflöst, eine Scaneinrichtung zur Verschiebung des Punkts relativ zur Probe in verschiedene Scanpositionen mit einer Schrittweite, die kleiner ist als der Durchmesser des Beleuchtungsflecks, eine Auswerteeinrichtung zum Erzeugen eines 3D-Bilds der Probe aus den Daten des Flächendetektors und den diesen Daten zugeordneten Scanpositionen, wobei das Bild eine Auflösung aufweist, die über eine Auflösungsgrenze der Abbildung gesteigert ist.

Eine klassische Ausprägung der Lichtmikroskopie ist die Laser-Scanning-Mikroskope (auch LSM abgekürzt), die mittels einer konfokalen Detektionsanordnung nur diejenige Ebene der Probe abbildet, die sich in der Fokusebene des Objektives befindet. Es wird ein optischer Schnitt gewonnen, dessen Dicke von der Größe der konfokalen Blende abhängt. Die Aufzeichnung mehrerer optischer Schnitte in verschiedenen Tiefen der Probe erlaubt es, ein dreidimensionales Bild der Probe zu generieren, das dann aus den verschiedenen optischen Schnitten zusammengesetzt ist. Die Laser-Scanning-Mikroskopie ist somit zur Untersuchung von dicken Präparaten geeignet.

Prinzipiell ist die optische Auflösung eines Lichtmikroskops, auch die eines LSM, durch die physikalischen Gesetze beugungsbegrenzt. Der Begriff "hochauflösend" wird hier für Auflösungen jenseits der Beugungsgrenze verwendet. Das Überwinden der Beugungsgrenze gelingt der sogenannten Airy-Scan-Mikroskopie, die z.B. in EP 2317362 A1 beschrieben ist. Diese kombiniert in der dort in Fig. 5 dargestellten und beschriebenen Ausführungsform eine beugungsbegrenzte Beleuchtung der Probe mit einem Flächendetektor, wobei eine Scaneinrichtung so ausgebildet ist, dass das Beugungsbild des mit dem Beleuchtungsfleck beleuchteten Punktes auf dem Flächendetektor ruht. Man bezeichnet diese Anordnung als sogenannte "de-scanned" Detektoranordnung. Sie wird üblicherweise dadurch erreicht, dass ein Scanner zwischen der Probe und dem Vereinigungspunkt von Beleuchtungseinrichtung und Abbildungseinrichtung angeordnet ist, der den Strahlengang ablenkt. Ein solcher Scanner wirkt sowohl auf den Beleuchtungsfleck als auch auf die Abbildung des mit dem Beleuchtungsfleck beleuchteten Punktes, so dass in Abbildungsrichtung nach dem Scanner der Strahlengang ruht. Eine Alternative zu einem solchen Scanner ist die Verwendung eines bewegbaren Probentischs, der die Probe verschiebt. Auch dann ruht das Beugungsbild auf dem Flächendetektor. Im Konzept der EP 2317362 A1 ist der Flächendetektor mit einer Ortsauflösung versehen, die es erlaubt, die Struktur des Beugungsbildes aufzulösen.

Der Erfindung liegt die Aufgabe zugrunde, ein Verfahren bzw. ein Mikroskop dieser Art so weiterzubilden, dass die Bildgewinnung beschleunigt ist.

Die Erfindung ist in den Ansprüchen 1 und 6 definiert.

Die Erfindung sieht ein Verfahren zur hochaufgelösten Scan-Mikroskopie einer Probe gemäß dem Airy-Scan-Prinzip vor. Die Probe wird mit Beleuchtungsstrahlung beleuchtet. Dabei wird die Beleuchtungsstrahlung an einem Punkt in oder auf der Probe zu einem beugungsbegrenzten Beleuchtungsfleck gebündelt. Dieser Punkt wird beugungsbegrenzt in ein Beugungsbild auf einen Flächendetektor abgebildet. Der Flächendetektor weist Pixel auf und dadurch eine Ortsauflösung, die eine Beugungsstruktur des Beugungsbildes auflöst. Der Punkt wird relativ zur Probe in verschiedene Scanpositionen verschoben. Eine Schrittweite zwischen aufeinanderfolgenden Scanpositionen ist dabei kleiner als der Durchmesser des Beleuchtungsflecks, wodurch jeder Punkt der Probe mehrmals in verschieden liegenden Beleuchtungsflecken und Beugungsbilder enthalten ist. Der Flächendetektor wird ausgelesen. Aus den dabei gewonnen Daten und den diesen Daten zugeordneten Scanpositionen wird ein Bild der Probe erzeugt.

Das Bild weist nach dem Airy-Scan-Prinzip eine Auflösung auf, die über eine Auflösungsgrenze der Abbildung hinaus gesteigert ist. Die Beugungsgrenze ist damit überwunden.

Um das Verfahren zu beschleunigen, wird die Auswertung der Daten zweistufig vorgenommen. Die Daten des Flächendetektors entsprechend den Daten der Pixel, d.h. den Signalen jeweils eines Pixels. Dazu werden die Pixel des Flächendetektors in mindestens zwei Gruppen eingeteilt. Die Gruppen umfassen eine zentrale Gruppe, die auf einer optischen Achse liegt. Die zentrale Gruppe deckt damit eine zentrale Zone ab. Eine weitere Gruppe umgibt ringförmig die zentrale Gruppe. Die dieser ringförmig umgebenden Gruppe zugeordnete Zone umgibt also die Zone der zentralen Gruppe ringförmig. Für jede Gruppe wird ein vorverrechnetes Rohbild berechnet. Die vorverrechneten Rohbilder werden zusammengefasst entfaltet, um das hochaufgelöste Bild der Probe zu erzeugen. Das Auswerteverfahren wird somit zur Beschleunigung des Verfahrens zweistufig ausgeführt, zuerst für die jeweiligen Gruppen bzw. der ihnen zugordneten Zonen auf den Flächendetektor individuell und dann auf Gruppenebene. Dies ergibt eine Beschleunigung der Bildauswertung.

Analog zum Verfahren ist ein entsprechendes Mikroskop vorgesehen, das einen Beleuchtungsstrahlengang zur Beleuchtung der Probe mit den genannten Eigenschaften und einen Abbildungsstrahlengang zur beugungsbegrenzten Abbildung des Punkts in ein Beugungsbild auf den Flächendetektor mit seinen Pixeln umfasst. Die Auswerteeinrichtung zum Erzeugen eines Bildes der Probe aus den Daten des Flächendetektor und den diesen Daten zugeordneten Scanpositionen ist weiter ausgebildet, die Pixel des Flächendetektors in die genannten Gruppen einzuteilen und die Auswertung zweistufig, d.h. zuerst für jede Gruppe individuell und dann auf Gruppenebene durchzuführen.

Um eine der "klassischen" Airy-Scan-Verrechnung, bei der das Signal eines jeden Detektorpixels einzeln verarbeitet wird, gleichwertige Auflösung in z-Richtung zu erreichen, kann es erforderlich sein, mehrere ringförmige Gruppen zu bilden. Die Verarbeitung der Daten nimmt mit zunehmender Gruppenzahl ab, ist aber in jedem Fall deutlich schneller als die klassische Verrechnung. Es ist deshalb bevorzugt, nicht nur eine ringförmig umgebende Gruppe, sondere mehrere zu verwenden, wobei die ringförmigen Gruppen jeweils einen anderen Abstand zur zentralen Gruppe haben. Es ist dann ein System von sich umgebenden ringförmigen Gruppen vorgesehen, das um die zentrale Gruppe herum angeordnet ist. Besonders bevorzugt sind vier oder fünf Gruppen.

Weiter ist es bevorzugt vorgesehen, dass jedes Pixel in genau eine der Gruppen eingeteilt ist.

Die vorverrechneten Rohbilder für jede Gruppe werden in einer bevorzugten Ausbildungsform berechnet, indem für die jeweilige Gruppe eine zweidimensionale Entfaltung der Daten des Flächendetektors durchgeführt wird. Die zweistufige Auswertung sieht dann zuerst eine 2D-Entfaltung für die Gruppen und dann eine 3D-Entfaltung auf Gruppenebene vor.

Im Verfahren bzw. beim Mikroskop wird insbesondere durch die Beleuchtung die Probe zur Abgabe von Fluoreszenzstrahlung angeregt. Der Beleuchtungsstrahlengang ist dann als Anregungsstrahlengang ausgebildet.

Soweit nachfolgend Aspekte des Verfahrens zur Mikroskopie erläutert werden, betreffen diese Aspekte gleichermaßen die Auswerteeinrichtung, die geeignet ausgebildet ist, die entsprechenden Verfahrensschritte auszuführen. Es kann sich dabei um einen Computer handeln, der mit entsprechender Software oder mit entsprechendem Programmcode ausgestaltet ist. Umgekehrt betreffen Aspekte, die anhand des Mikroskops und dessen Arbeitsweise geschildert werden, gleichermaßen das Verfahren zur Mikroskopie.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:

Fig. 1             eine Schemadarstellung eines Mikroskops zur hochauflösenden Mikroskopie,
Fig. 2, 2a und 2b   Schemadarstellungen der Anordnungen von Pixeln eines Detektors des Mikroskops der Fig. 1,
Fig. 3             einen Signallaufplan zum Mikroskopieverfahren,
Fig. 4             ein Ausführungsbeispiel für die Datenverarbeitung eines hochauflösenden Konfokalmikroskops,
Fig. 5             eine alternative Datenverarbeitung zu der der Fig. 4,
Fig. 6a - 6c        Mean Transfer Functions der Objekt-Transfer-Funktion des verwendeten Mikroskops,
Fig. 7             eine Schemadarstellung der Aufteilung der Pixel des Detektors in Gruppen,
Fig. 8             den Signallaufplan zur Verrechnung von Bildern mit erhöhter Auflösung gemäß einem ersten Signalauswertungsbeispiel,
Fig. 9             eine Darstellung ähnlich der Fig. 8 gemäß einem zweiten Signalauswertungsbeispiel und
Fig. 10a - 10c      Mean Transfer Functions für die verschiedenen Auswertungsansätze.

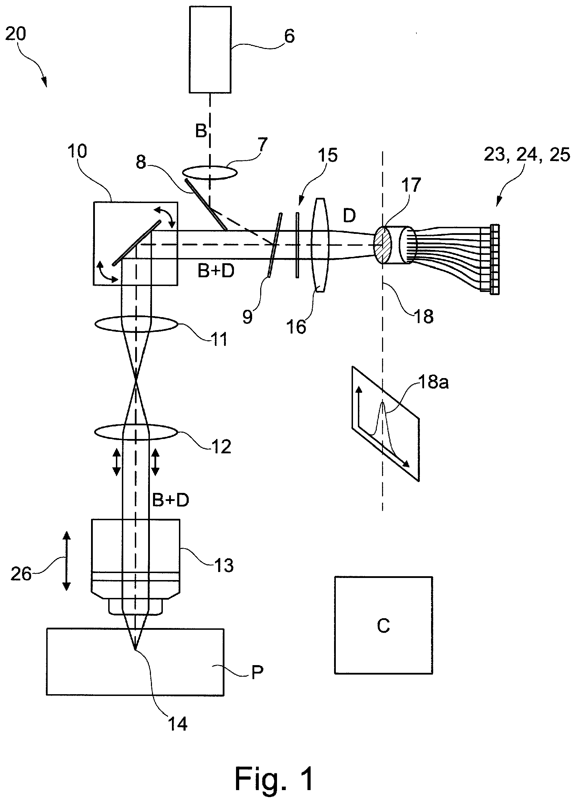

Fig. 1 zeigt schematisch ein Konfokalmikroskop 20 mit hoher, d. h. über die Beugungsgrenze gesteigerter Auflösung nach dem Prinzip des sog. Airy-Scans, wie es z. B. aus der EP 2317362 A1 bekannt ist. Es besitzt eine Lichtquelle 6 zur Beleuchtung der Probe P mit einem Beleuchtungsfleck 14. Das Beleuchtungslicht B wird über eine Strahlformung 7, einen Spiegel 8 zu einem Strahlteiler 9 geleitet. Der Strahlteiler 9 ist so ausgebildet, dass er möglichst viel des Beleuchtungslichts B reflektiert und zu einem Scanner 10 weiterleitet. Vom Scanner 10 wird das Beleuchtungslicht B über weitere Strahlformungsoptiken 11 und 12 zu einem Objektiv 13 geleitet. Das Objektiv 13 bündelt das Beleuchtungslicht B auf die Probe P in einen Beleuchtungsfleck 14.

Das von der Probe im Beleuchtungsfleck B erzeugte Probenlicht D wird vom Objektiv 13 gesammelt und über umgekehrten Weg wie das Beleuchtungslicht B zum Strahlteiler 9 geleitet. Der Strahlteiler 9 ist so gestaltet, dass er einen möglichst großen Anteil des Probenlichts D transmittiert. Das so vom Strahlteiler 9 transmittierte Probenlicht D wird über einen weiteren Filter 15 und eine weitere Strahlformungsoptik 16 zum Detektor 17 geleitet. Der Detektor 17 detektiert das Probenlicht D, erzeugt daraus elektrische Signale und leitet diese über Leiter 23, 24, 25 an eine Steuer- und Auswerteeinrichtung C, z. B. einen Computer, weiter. Auf diese Weise wird ein Beugungsbild 18 aufgenommen, das, wie die Beugungsstruktur 18a zeigt, beugungsbegrenzt ist.

Um ein Bild von der Probe P zu erhalten, wird der Beleuchtungsfleck 14 mit dem Scanner 10 punktweise über die Probe P bewegt. Aus den so gewonnenen punktweisen Probensignalen wird von der Steuer- und Auswerteeinrichtung C ein Bild zusammengesetzt, welches z. B. mittels eines Monitors dargestellt werden kann. Der Scanner 10 erlaubt es dabei, ein zweidimensionales Bild aufzunehmen, welches sich lateral, also in einer Ebene senkrecht zur optischen Achse des Objektivs erstreckt. Für eine dreidimensionale Bildaufnahme wird der Abstand des Objektivs 26 relativ zur Probe P variiert und in jedem Abstand ein zweidimensionales Bild von der Probe P aufgenommen. Die Auswerteeinheit kann die so gewonnenen Signale zu einem dreidimensionalen Bild zusammensetzen.

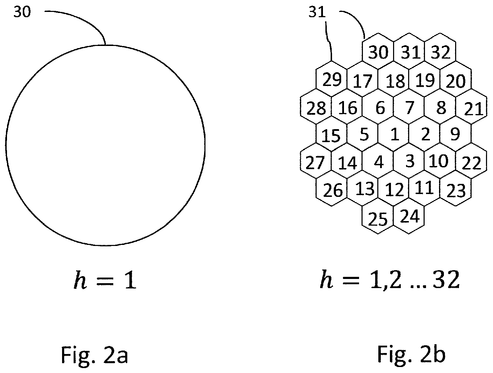

In Fig. 2a und 2b sind Detektoren eines konfokalen Mikroskops schematisch dargestellt. Fig. 2a zeigt einen herkömmlichen Detektor mit einer einzigen sensitiven Fläche 30. Um die hohe Auflösung zu erreichen, besitzt der Detektor 17 des Konfokalmikroskops 20 mehrere Detektionselemente oder Pixel 31 wie in Fig. 2b. Die Elemente sind durchnummeriert, die Anordnung besitzt exemplarisch 32 Pixel.

Die Größe der Pixel 31 ist so gewählt, dass sie wesentlich kleiner als das auf dem Detektor 17 erzeugte Beugungsbild 18 sind. Gleichzeitig ist die Anzahl der Pixel 31 und damit die gesamte Fläche des Detektors 17 so gewählt, dass ein wesentlicher Anteil des Probenlichts D für das Beugungsbild 18 detektiert werden kann.

Zum Vergleich ist in Fig. 2a ein Detektor mit nur einem Element 30 angedeutet, wie er für ein Konfokalmikroskop mit gewöhnlicher Auflösung verwendet würde. Mit anderen Worten, die gesamte Fläche des Detektors deckt einen großen Teil des Beugungsbildes 18 ab. Dabei ist der Begriff gewöhnliche Auflösung so zu verstehen, dass für die erreichte Auflösung das Abbe-Limit gilt. Beim Konfokalmikroskop 20 mit erhöhter Auflösung hingegen wirken die Beleuchtung und die Detektion so zusammen, dass theoretisch eine doppelt so hohe Auflösung erreicht werden kann. In der Praxis ist die Auflösungssteigerung etwas geringer, weil Strukturen nahe der Auflösungsgrenze nur noch sehr kontrastarm übertragen werden können. Es lassen sich real Auflösungen bis zum 1,7-fachen des Abbe-Limits erreichen.

Der Detektor 17 des Konfokalmikroskops 20 mit hoher Auflösung erfasst für jeden abgetasteten Punkt $P(\vec{r}, z)$ viele detektierte Signale $D_h(\vec{r}, z)$ entsprechend der Anzahl der Detektorelemente 31. $\vec{r}$ bezeichnet die laterale Probenposition, z die axiale Probenposition, der Index $h$ bezeichnet das Detektorelement (Pixel). In der weiteren Beschreibung wird von 32 Pixeln ausgegangen; es kann jedoch auch eine andere Anzahl an Pixeln verwendet werden.

Jedes der Detektorelemente 31 erfasst ein Rohbildsignal von der Probe P bestehend aus den Signalen $D_h(\vec{r}, z)$. Die Rohbildsignale unterscheiden sich voneinander, wobei die Unterschiede durch den lateralen Abstand des Beleuchtungslichtflecks relativ zum vom jeweiligen Detektorelement detektierten Probenbereich bestimmt sind. Die Rohbildsignale werden mathematisch durch eine Faltung des "wirklichen" Probenbildes $O(\vec{r}, z)$ mit der Punktbildübertragungsfunktion (engl. Point spread function, PSF) $I_h(\vec{r}, z)$ des jeweiligen Detektorelementes $h$ beschrieben:

$$D_h(\vec{r}, z) = I_h(\vec{r}, z) * O(\vec{r}, z)$$

Die Funktion der Auswerteeinheit C ist es, aus allen $D_h(\vec{r}, z)$ ein Bild $\tilde{O}(\vec{r}, z)$ zusammenzusetzen, das möglichst genau dem Original der Probe $O(\vec{r}, z)$ entspricht. Das wird durch eine Entfaltung (engl. Deconvolution, DCV) und anschließende Zusammensetzung der so entfalteten Rohbildsignale erreicht, wobei die Prozesse Entfaltung und Zusammensetzung prozesstechnisch ineinander übergehen können.

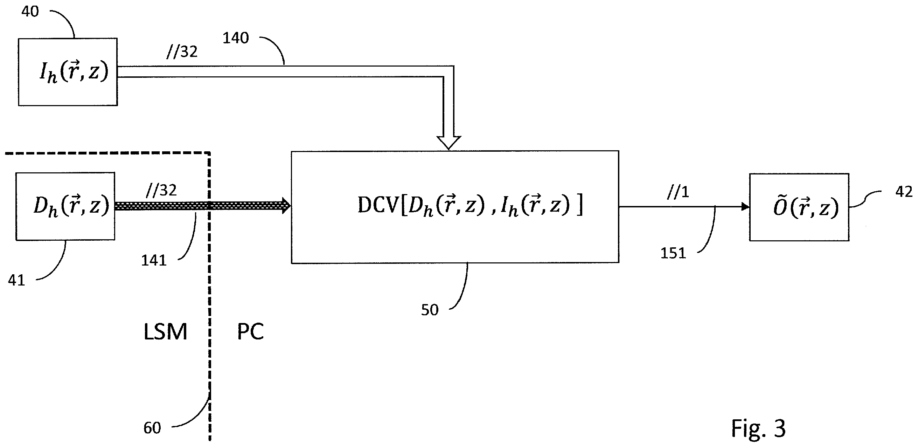

In Fig. 3 sind alle Schritte in einem Signallaufplan dargestellt. Ausgangspunkt sind die PSFs $I_h(\vec{r},z)$ (40) sowie die Rohbildsignale $D_h(\vec{r},z)$ (41). Die PSFs sind aufgrund der Eigenschaften des optischen Systems bekannt. Sie können aus Systemparametern berechnet oder einmalig gemessen und hinterlegt werden. Die Signale werden über Leitungen 140, 141 zur Auswertung 50 weitergeleitet, die alle Rohbildsignale entsprechend entfaltet, zusammensetzt und ein Bild der Probe $\tilde{O}(\vec{r},z)$ (42) ausgibt, welches möglichst genau dem Original der Probe $O(\vec{r},z)$ entspricht.

In Fig. 3 und allen weiteren Signallaufplänen ist die Menge der zu übertragenden Daten durch die Dicke der Pfeile 140, 141, 151 dargestellt. So gibt es 32 Rohbildsignale $D_h(\vec{r},z)$, sowie auch 32 PSFs $I_h(\vec{r},z)$. Aus der Auswertung entsteht ein Bild der Probe $\tilde{O}(\vec{r},z)$, die Datenmenge dieses Bildes ist 32mal geringer als die aller Rohbildsignale. Das ist durch den dünnen Pfeil 151 symbolisiert. Ebenso ist der Faktor der Datenmengen bezogen auf ein einzelnes Bild an den Pfeilen angegeben. Also //32 für die Rohbildsignale und PSFs, //1 für das Bild der Probe.

Mit der gestrichelten Linie 60 sind Bereiche des gesamten konfokalen Mikroskops 20 voneinander abgegrenzt, zwischen denen die Daten der Rohbildsignale übertragen werden müssen. Dabei umfasst der Bereich LSM (Laser Scanning Microscope) hardwarenahe Bereiche des Konfokalmikroskops, also Optik, Mechanik und Elektronik, welche eine Datenübertragung zum Bereich PC ermöglicht. Der Bereich PC beschreibt die Steuer- und Auswerteeinrichtung C und damit alles, was zur Steuerung des Konfokalmikroskops 20, der weiteren Verarbeitung und Darstellung der Daten erforderlich ist. Kernstück dieses Bereichs ist üblicherweise ein Personal Computer C. Konkret müssen die Daten aller Rohbildsignale vom LSM zum PC übertragen werden. Dazu ist eine leistungsfähige Schnittstelle erforderlich, bzw. die Geschwindigkeit der Datenübertragung kann durch eine vorgegebene Schnittstelle limitiert sein.

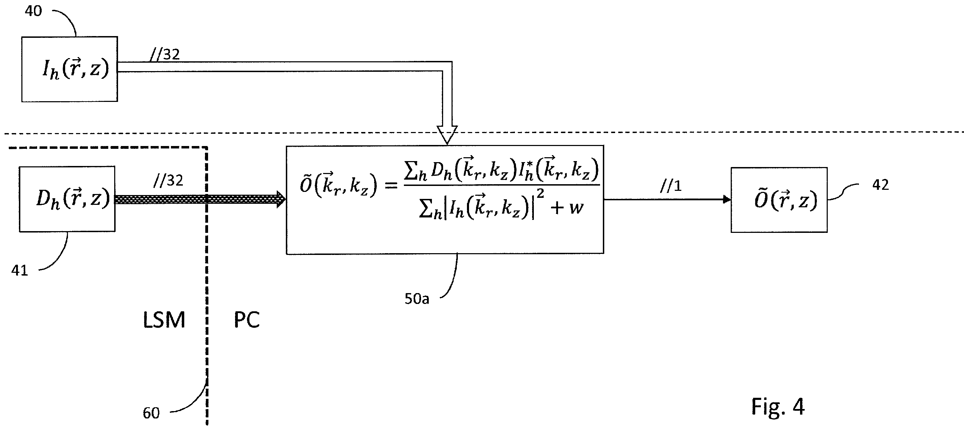

In Fig. 4 ist eine konkretere Ausführung der Datenverarbeitung eines Konfokalmikroskops 20 mit hoher Auflösung dargestellt. Die Auswerteeinheit 50a führt dabei eine sog. Wiener-Filterung aus. Dazu werden zunächst die in Raumkoordinaten dargestellten Rohbildsignale $D_h(\vec{r},z)$ fouriertransformiert, so dass die Rohbildsignale nun in Raumfrequenzkoordinaten $D_h(\vec{k}_r,k_z)$ vorliegen. Mit den PSFs wird ebenso verfahren. Die in den Fourierraum transformierten PSFs $I_h(\vec{k}_r,k_z)$ werden als Objekt-Transfer-Funktion OTF bezeichnet.

Für das Verständnis der Entfaltungsformel in 50a sind zwei Punkte wichtig:

1. Die Rohbildsignale entsprechen der Probe gefaltet mit der System-PSF; wie oben bereits dargestellt:

2. Eine Faltung im Ortsraum entspricht einer Multiplikation im Fourierraum. D.h. im Fourierraum lassen sich die Rohbildsignale als Produkt aus Probe und OTF darstellen:

$$D_h(\vec{k}_r,k_z) = I_h(\vec{k}_r,k_z) \cdot O(\vec{k}_r,k_z)$$

Setzt man die Formel für $D_h(\vec{k}_r,k_z)$ in die Entfaltungsformel ein so erhält man:

$$\tilde{O}(\vec{k}_r,k_z) = \frac{\sum_h I_h(\vec{k}_r,k_z) \cdot O(\vec{k}_r,k_z) \cdot I_h^*(\vec{k}_r,k_z)}{\sum_h \left|I_h(\vec{k}_r,k_z)\right|^2 + w} = O(\vec{k}_r,k_z) \cdot \frac{\sum_h \left|I_h(\vec{k}_r,k_z)\right|^2}{\sum_h \left|I_h(\vec{k}_r,k_z)\right|^2 + w}$$

$I_h^*(\vec{k}_r,k_z)$ bezeichnet die OTF mit konjugiert-komplexer Phase, das Produkt mit der (originalen) OTF ergibt dann deren Betragsquadrat.

w ist eine reelle positive Zahl und sei hier als Wiener-Parameter bezeichnet. Ist der Wiener-Parameter klein gegenüber $\sum_h \left|I_h(\vec{k}_r,k_z)\right|^2$, so wird der Bruch nahezu 1 und $\tilde{O}(\vec{k}_r,k_z)$ entspricht nahezu dem Original der Probe $O(\vec{k}_r,k_z)$. Ein nicht zu geringes w stellt andererseits sicher, dass der Bruch an Stellen $(\vec{k}_r,k_z)$, an denen $\sum_h \left|I_h(\vec{k}_r,k_z)\right|^2$ klein ist, nicht divergiert. Solche Divergenzen würden das in den Rohbildsignalen $D_h(\vec{k}_r,k_z)$ unweigerlich und hier nicht dargestellte Rauschen über alle Maßen verstärken und das Ergebnisbild $\tilde{O}(\vec{k}_r,k_z)$ unbrauchbar

machen.

Um das Bild darstellen zu können, muss das in Raumfrequenzkoordinaten vorliegende Bild $\tilde{O}(\vec{k}_r, k_z)$ mit der inversen Fouriertransformation in den Ortsraum zurück transformiert werden. Obwohl die eigentliche Entfaltung 50a sich aus vergleichsweise einfachen Rechenschritten (nur Additionen und Multiplikationen) zusammensetzt, ist der gesamte Prozess der Entfaltung aufwendig. Insbesondere die Fouriertransformation aller Rohbildsignale $D_h(\vec{r}, z)$ ist rechenintensiv und damit zeitaufwendig.

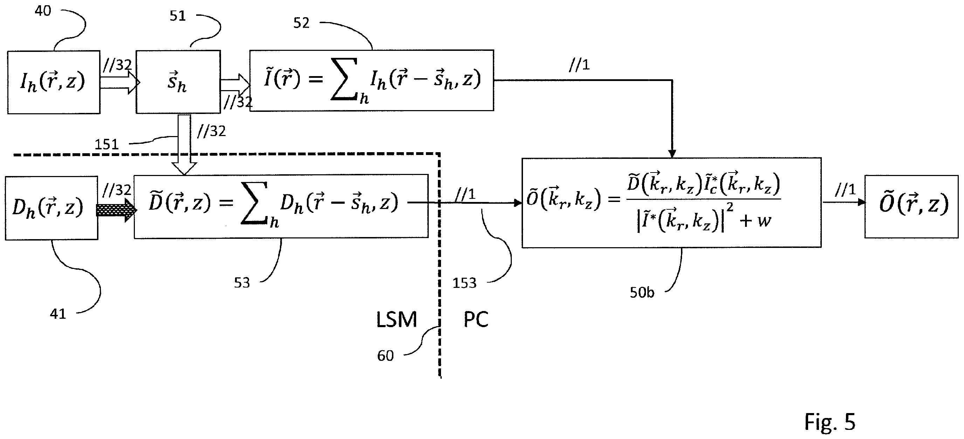

Eine alternative Verarbeitung der Rohbildsignale ist in Fig. 5 dargestellt. Diese alternative Verarbeitung der Rohbildsignale macht es sich zunutze, dass sich die einzelnen Rohbildsignale lateral, also in $\vec{r}$ -Richtung im Wesentlichen nur durch eine Verschiebung untereinander unterscheiden. Die Verschiebungen $s_h$ 51 sind eine Funktion der PSFs $I_h(\vec{r}, z)$ und lassen sich mit relativ geringem Aufwand berechnen. Daraus ergibt sich nun ein Verarbeitungsweg per Näherung: Die Rohbildsignale werden um die Verschiebungen $s_h$ zurückgeschoben und anschließend addiert 53. Diese Verschiebung erfolgt mit allen Ebenen z der Rohbildsignale auf gleiche Weise. Im Ergebnis entsteht ein vorverrechnetes Rohbild $\tilde{D}(\vec{r}, z)$. Auf gleiche Weise wird eine vorverrechnete PSF $\tilde{I}(\vec{r}, z)$ 52 berechnet. In einem weiteren Schritt 50b wird das vorverrechnete Rohbild mit der vorverrechneten PSF entfaltet und es entsteht ein entfaltetes Rohbild der Probe $\tilde{O}(\vec{r}, z)$. Die Vorteile dieses Verarbeitungsweges bestehen darin, dass zum einen die Vorverrechnung (53) sehr einfach und damit schnell ist. Dadurch wird es möglich, die Vorverrechnung bereits vor der Datenübertragung zum PC hin 153 durchzuführen so dass nur noch ein statt 32 Bilder übertragen werden müssen. Das entlastet die Schnittstelle zwischen LSM und PC. Zum anderen ist nach Abschluss der Bildaufnahme ist dann nur noch die Entfaltung des vorverrechneten Rohbildes erforderlich. Das erfolgt ebenfalls wesentlich schneller, weil nur noch eine Fouriertransformation erforderlich ist und weil die Summierungen bei der Entfaltung entfallen. In Summe benötigt die gesamte Verrechnung nur noch einen Bruchteil der ursprünglich erforderlichen Zeit.

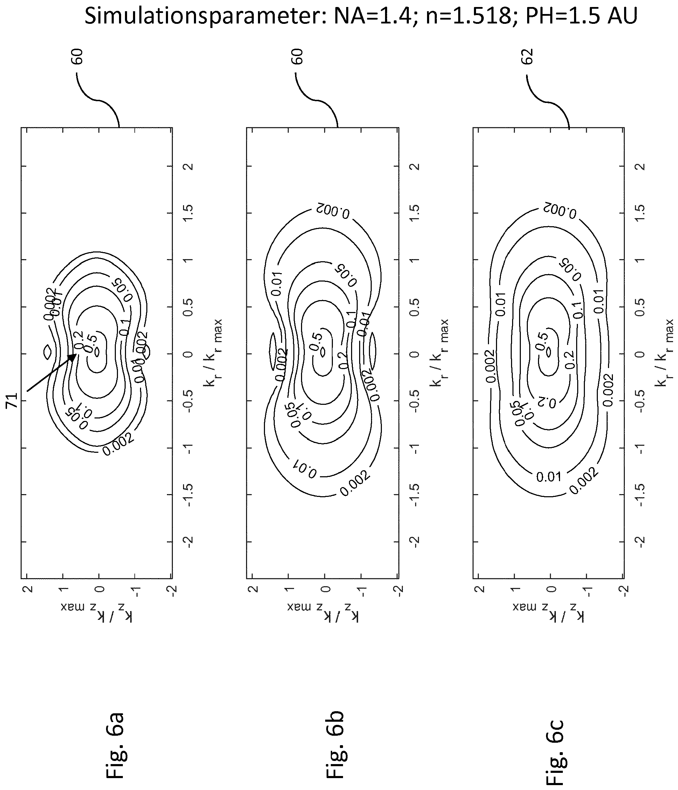

Dieser vorteilhaften Eigenschaft des Verarbeitungsweges steht jedoch ein gravierender Nachteil gegenüber. Und zwar beachtet die Vorverrechnung keinerlei Eigenschaften der Rohbildsignale bezüglich z, was dazu führt, dass die Auflösung in z-Richtung auf das Maß zurückfällt, wie sie ein konventionelles konfokales Mikroskop erreicht. Das ist in Fig. 6 dargestellt. Die Diagramme a-c zeigen die "Mean Transfer Function" MTF, welche als Betrag der OTF definiert ist. Auf der x-Achse ist die laterale, auf der y-Achse die axiale Raumfrequenz aufgetragen. Beide Achsen sind normiert auf die Grenzfrequenz, in lateraler bzw. axialer Richtung, bezogen auf ein Weitfeld-System. Die Amplituden der MTF sind als Höhenlinien aufgetragen, normiert auf die Amplitude bei $\vec{k}_r, k_z = 0$. Hohe Amplituden der MTF bedeuten einen guten Kontrast des Bildes, bzw. nach Korrektur durch die DCV bedeuten hohe Amplituden der MTF ein besonders rauscharmes Bild. Fig. 6a zeigt die MTF eines konventionellen konfokalen Systems mit einem einzelnen Detektor wie in Fig. 2a dargestellt. Die laterale Auflösung eines solchen Systems entspricht in etwa der eines Weitfeld-Mikroskops, d.h. die maximale Ausdehnung in $\vec{k}_r$ -Richtung erreicht in etwa 1. In axialer Richtung wird bereits eine Auflösungssteigerung gegenüber einem Weitfeld-System erreicht. Allerdings bricht die axiale Auflösung auf der Achse, bei $\vec{k}_r = 0$, ein. Dies ist durch den Pfeil 71 in Fig. 6a angezeigt. In Fig. 6c ist demgegenüber die MTF dargestellt, wie sie ein konfokales Mikroskop 20 mit erhöhter Auflösung erreichen kann, wenn die Verrechnung der Rohbilder wie in Fig. 3 oder 4 beschrieben erfolgt. Die laterale Auflösung wird auf etwa das 1,5-fache gesteigert, und in $k_z$- Richtung auf der Achse gibt es keinen Einbruch 71 der MTF mehr. Erfolgt die Verrechnung der Rohbilder mit der schnell rechnenden Näherung wie in Fig. 5 dargestellt, so wird immer noch eine Auflösungssteigerung in lateraler Richtung erreicht. In axialer Richtung jedoch wird der Einbruch in $k_z$- Richtung nicht behoben. Das ist in Fig. 6b dargestellt.

Um die Vorteile einer schnellen Verarbeitung zu erreichen ohne dabei die Nachteile der geringeren z-Auflösung in Kauf nehmen zu müssen, wird nun die Auswertung besonders, nämlich zweistufig, ausgestaltet.

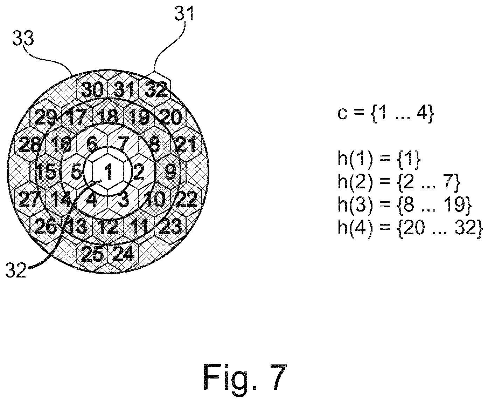

Dazu sei zunächst Fig. 7 betrachtet. Dargestellt ist hier nochmal der Detektor wie in Fig. 2b. Der Beleuchtungslichtfleck 14 ist bezüglich des Detektors 17 üblicherweise zentrisch justiert. Mit anderen Worten, der Schwerpunkt des Beleuchtungslichtflecks 14 stimmt mit dem Schwerpunkt des ersten Pixels 32 überein. Die Auflösung in axialer ($k_z$-) Richtung hängt bei einer PSF, die zur optischen Achse symmetrisch ist (insbesondere rotationssymmetrisch), nur vom Abstand eines Pixels 32 relativ zum Beleuchtungslichtfleck 14 ab, nicht jedoch von der Richtung des Pixels 32 relativ zum Beleuchtungslichtfleck 14. Das heißt wiederum, es gibt dann ringförmige Zonen 33 auf dem Detektor mit gleichen Eigenschaften der PSF in axialer Richtung. Diese Eigenschaft wird ausgenutzt, um zunächst die Daten aller Pixel innerhalb eines Ringes zweidimensional zu verrechnen. Dabei wird die PSF in axialer Richtung - wegen der gleichen Eigenschaft in axialer Richtung - nicht eingeschränkt. Die so vorverrechneten Rohbilder werden in einem weiteren Schritt final zusammengefasst und entfaltet, wobei in diesem Schritt die Eigenschaften bezüglich z der vorverrechneten Rohbilder berücksichtigt werden können und so auch in z-Richtung die maximale Auflösung erreicht werden kann.

Der Vorteil dieser zweistufigen Auswertung besteht darin, dass die Vorverrechnung der Bilder wesentlich weniger rechenintensiv ist, besonders wenn sie zweidimensional ausgeführt wird, also keine Tiefeninformation erzeugt, wie eine direkte dreidimensionale Verrechnung nach Fig. 3. Die finale - aufwendigere - 3D-Verrechnung ist dann nur noch mit einer reduzierten Anzahl an vorverrechneten Rohbildern erforderlich und erfolgt entsprechend schneller.

Zur Ökonomie dieses Verfahrens sei nochmal Fig. 7 betrachtet. Der beispielhafte Detektor lässt sich in z.B. 4 Ringzonen $c$ einteilen. Ringzone I enthält nur das zentrale Detektorelement 1, Ringzone II die Elemente 2..6, Ringzone III die Elemente 7-19 und Ringzone IV schließlich die Elemente 20-32. Aus ursprünglich 32 Rohbildern können so 4 vorverrechnete Rohbilder erzeugt werden, die nur noch 1/8 des ursprünglichen Datenvolumens enthalten.

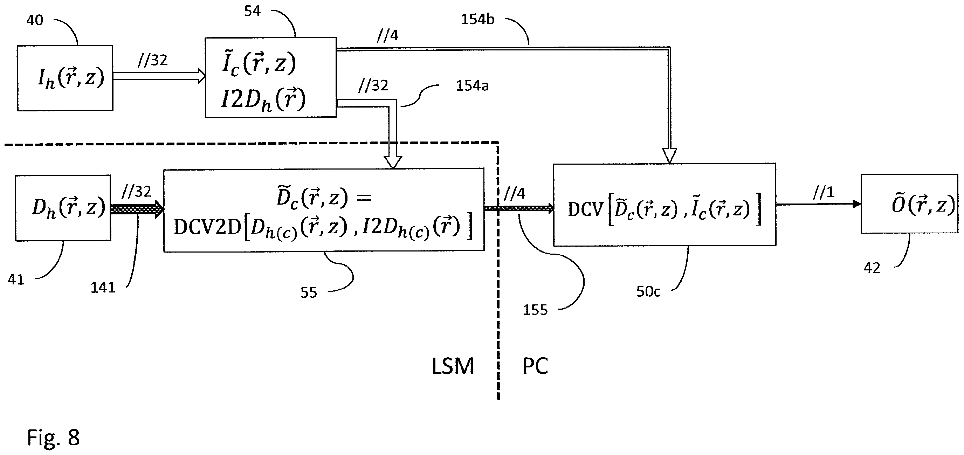

Fig. 8 zeigt allgemein die Verrechnung für das konfokale Mikroskop 20. In einem ersten Auswertungsbeispiel werden alle Rohbilder $D_h$ in einem ersten Schritt zu vorverrechneten Rohbildern $\tilde{D}_c$ 55 zusammengefasst. Die Zusammenfassung erfolgt vorteilhafterweise so, dass keinerlei Auflösungsverlust in lateraler Richtung auftritt. Zum Beispiel können alle Rohbilder bezüglich ihrer zweidimensionalen PSF $l2D_h(\vec{r})$ zunächst entfaltet werden. Die Zusammenfassung 55 erfolgt dann gemäß den Ringzonen $c$ des Detektors 17. Die Anzahl der vorverrechneten Rohbilder ist wesentlich niedriger als die Anzahl der Rohbildsignale. Im Beispiel gibt es 32 Rohbildsignale, aber nur 4 vorverrechnete Rohbilder. Die Menge der Daten ist also um einen Faktor 8 reduziert. Damit ist auch die Menge der zu übertragenden Daten 155 vom LSM zum PC zur finalen Verrechnung 50c um einen Faktor 8 reduziert. Die finale DCV umfasst die Entfaltung und Zusammenfassung der vorverrechneten Rohbilder. Dazu bestimmt das System die PSFs $\tilde{I}_c(\vec{r},z)$ der vorverrechneten Rohbilder und entfaltet die vorverrechneten Rohbilder mit diesen PSFs. Final entsteht das entfaltete Bild $\tilde{O}(\vec{r})$ von der Probe, welches sehr genau der Probe entspricht und mit üblichen Mitteln dargestellt werden kann.

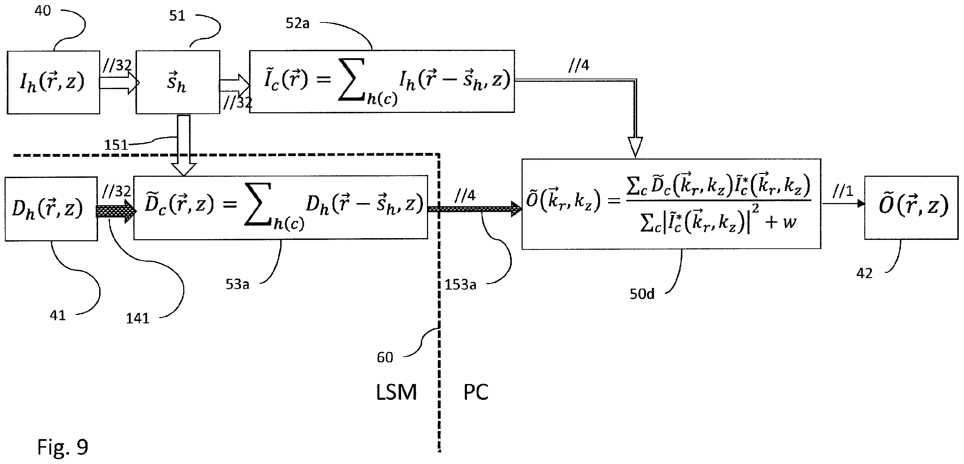

Fig. 9 betrifft ein zweites Auswertungsbeispiel für das konfokale Mikroskop 20. Es macht es sich zunutze, dass sich die einzelnen Rohbildsignale lateral, also in $\vec{r}$- Richtung im Wesentlichen nur durch eine Verschiebung untereinander unterscheiden. Die Verschiebungen $s_h$ 51 sind eine Funktion der PSFs $I_h(\vec{r},z)$ und lassen sich mit relativ geringem Aufwand berechnen. Zur Zusammenfassung wird die Verschiebung der Rohbildsignale kompensiert, anschließend werden je alle so verschobenen Rohbildsignale, die zu einer Ringzone des Detektors gehören, addiert 53a. Diese Rechenschritte lassen sich ebenfalls sehr schnell, und schon während der Bildaufnahme bewerkstelligen. Auf die gleiche Weise werden die PSFs der vorverrechneten Rohbilder 52a berechnet. Die vorverrechneten Rohbilder werden der finalen Verrechnung 50d zugeführt 153a, anschließend entfaltet und addiert. Im Beispiel kommt eine Wiener-Entfaltung zum Einsatz wie sie in Fig. 4 im Schritt 50a beschrieben wurde. Durch die reduzierte Anzahl der vorverrechneten Rohbilder kann die Wiener-Entfaltung 50d wesentlich schneller erfolgen. Insbesondere müssen im Erfindungsbeispiel nur noch 4 und nicht mehr 32 Bilder fouriertransformiert werden. Die Wiener-Entfaltung stellt das finale 3D-Bild zur Verfügung, welches mit üblichen Mitteln dargestellt werden kann.

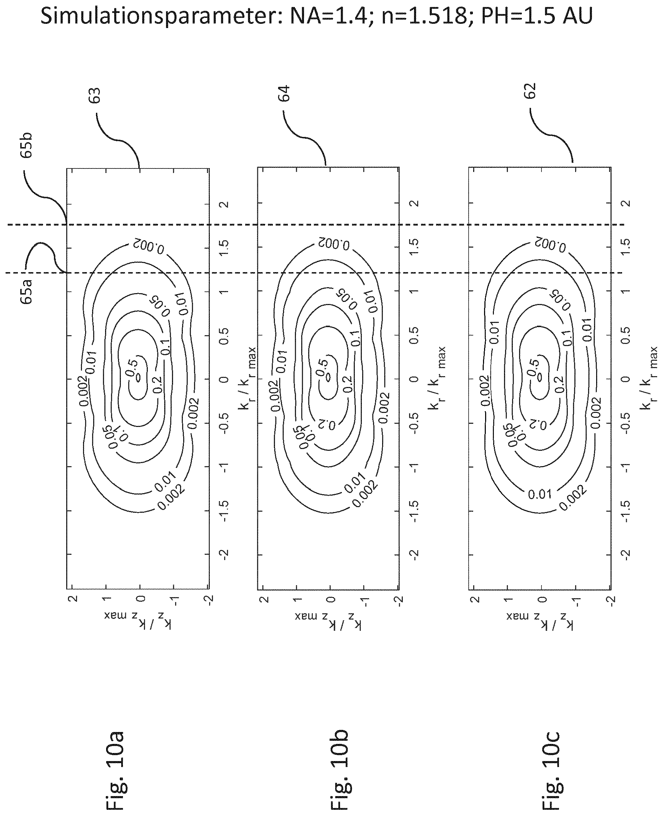

In Fig. 10a und 10b sind MTFs der konfokalen Mikroskope 20 dargestellt. Zum Vergleich ist in Fig. 10c die MTF dargestellt, wie sie ein System mit herkömmlichem Auswerten liefert. Fig. 10a zeigt die MTF des zweiten Auswertungsbeispiels gemäß Fig. 9. Der Einbruch der MTF in $k_z$- Richtung bei $\vec{k}_r = 0$, wie er in Fig. 6b auftritt, ist vollständig vermieden. Fig. 10b zeigt die MTF des ersten Auswertungsbeispiels, wobei eine 2D-DCV für die Vorverrechnung eingesetzt wurde. Gegenüber dem sehr schnellen Verfahren des zweiten Auswertungsbeispiels ergibt sich in lateraler Richtung bei Raumfrequenzen $\approx 1$ eine etwas größere MTF-Amplitude. Dies ist durch die Vergleichslinie 65a sichtbar gemacht. In Fig. 10b berührt diese Linie die MTF-Höhenlinie 0,05, in Fig. 10a liegt diese Höhenlinie etwas zentraler. Mit anderen Worten, an der Vergleichslinie 65a ist die MTF etwas geringer als in Fig. 10b. Im Bereich hoher lateraler Raumfrequenzen funktionieren beide Ausführungen wieder gleich gut. Das wird durch die Vergleichslinie 65b verdeutlicht. Sie zeigt, dass in beiden Figuren die Höhenlinie 0,002 die gleichen Ausmaße erreicht.

Es sei angemerkt, dass die Unterschiede beider Auswertungsbeispiele auch von den Parametern des Systems abhängig sind. So wurde für alle Simulationen ein gesamter Durchmesser der Detektorfläche angesetzt, die dem 1,5-fachen des Durchmessers des Airy-Beugungsscheibchens entspricht. Es zeigt sich, dass bei kleineren Durchmessern die Unterschiede geringer ausfallen. Je nach Wahl der Parameter können so unterschiedliche Auswertungsformen vorteilhaft sein und es ist auch denkbar, mehrere Auswertungsformen in einem System vorzusehen, die je nach Wahl der Parameter eingesetzt werden.

Zum Vergleich mit dem Stand der Technik ist in Fig. 10c eine MTF mit Auswertung gemäß dem Stand der Technik nach Fig. 3 dargestellt. Sie unterscheidet sich praktisch nicht von der MTF der Fig. 10b. Damit erreicht die zweistufige Auswertung gleich gute Ergebnisse bei wesentlich weniger Rechenzeit.

Dies ist nicht auf die konkret genannten Ausführungsbeispiele beschränkt. So können auch auf einem Detektor mit einer anderen, z. B. quadratischen Matrix-Ringregion Pixel definiert werden, die in z-Richtung eine hinreichend gleiche PSF besitzen, und gemeinsam vorverrechnet werden. Auch kann die Zahl der Zonen variiert werden, z. B. 2, 3 oder 5, 6.

Ebenso sind unterschiedliche Vorverrechnungen und finale Verrechnungen denkbar, solange sie den Vorteil der erhöhten Auflösung weitgehend erhalten. Beispielsweise können auch iterative Entfaltungsmethoden eingesetzt werden, welche die spezifischen Nachteile einer Wiener-Entfaltung vermeiden. Im Einzelfall kann auch ein Verfahren verwendet werden, welches nicht ganz so gute Ergebnisse, also eine etwas geringere MTF liefert, dafür aber weniger Rechenaufwand benötigt. Auch können Entfaltungsverfahren zum Einsatz kommen, die keine Kenntnis der System-PSF benötigen (sog. Blind Deconvolution).

Es ist nicht entscheidend, in welchem Format die vorverrechneten Rohbilder der finalen Verrechnung übergeben werden. So ist es z. B. denkbar, wenn die Vorverrechnung im Raumfrequenzraum stattfindet, die vorverrechneten Rohbilder nicht in den Ortsraum zurück zu transformieren, sondern als Raumfrequenzdaten zu übertragen. Das ist insbesondere dann vorteilhaft, wenn die finale Verrechnung ebenfalls im Raumfrequenzraum stattfindet. In diesem Falle muss die finale Verrechnung die Daten nur noch bezüglich z transformieren, nicht aber bezüglich der lateralen Koordinaten. Dadurch ergibt sich eine weitere Zeiteinsparung.

Es ist für das Verfahren nicht entscheidend, an welcher Stelle die Vorverrechnung und die finale Verrechnung stattfinden. So können auch zunächst alle Rohbildsignale über die Leitung 141 übertragen und die zweistufige Auswertung vollständig im PC durchgeführt werden. Dann entfällt der Vorteil geringerer/schnellerer Datenübertragung, es ergibt sich jedoch immer noch eine Beschleunigung aufgrund des geringeren gesamten Rechenaufwandes.

## Patentansprüche

1. Verfahren zur hochauflösenden Scanning-Mikroskopie einer Probe (P), wobei

    - die Probe (P) mit Beleuchtungsstrahlung derart beleuchtet wird, dass die Beleuchtungsstrahlung (B) an einem Punkt in oder auf der Probe (P) zu einem beugungsbegrenzten Beleuchtungsfleck (14) gebündelt wird,
    - der Punkt beugungsbegrenzt in ein Beugungsbild (18) auf einen Pixel (31) aufweisenden Flächendetektor (17) abgebildet wird, wobei der Flächendetektor (17) durch seine Pixel (31) eine Ortsauflösung aufweist, die eine Beugungsstruktur (18a) des Beugungsbildes (18) auflöst,
    - der Punkt relativ zur Probe (P) in verschiedene Scanpositionen mit einer Schrittweite verschoben wird, die kleiner ist als der Durchmesser des Beleuchtungsflecks (14),
    - der Flächendetektor (17) ausgelesen und aus den Daten des Flächendetektors (17) und aus den diesen Daten zugeordneten Scanpositionen ein Bild der Probe (P) erzeugt wird, das eine Auflösung aufweist, die über eine Auflösungsgrenze der Abbildung gesteigert ist,

    dadurch gekennzeichnet, dass

    - die Pixel (31) des Flächendetektor (17) in Gruppen (32, 33) eingeteilt werden, die eine auf einer optischen Achse liegende, zentrale Gruppe (32) und eine weitere, die zentrale Gruppe (32) ringförmig umgebende Gruppe (33) aufweisen,
    - für jede Gruppe (32, 33) ein vorverrechnetes Rohbild berechnet wird,
    - die vorverrechneten Rohbilder zusammengefasst und entfaltet werden, um das Bild der Probe (P) zu erzeugen,
    - wobei

        -- die vorverrechneten Rohbilder berechnet werden, indem für die jeweilige Gruppe (32, 33) eine zweidimensionale Entfaltung durchgeführt wird, und/oder
        -- Relativverschiebungen von in den Daten enthaltenen Rohbildsignalen berechnet werden, die Verschiebung der Rohbildsignale gegeneinander kompensiert und die derart kompensierten Rohbildsignale, die zu einer Gruppe gehören, addiert werden, um für jede Gruppe ein vorverrechnetes Rohbild zu berechnen.

2. Verfahren nach Anspruch 1, dadurch gekennzeichnet, dass die vorverrechneten Rohbilder dreidimensional entfaltet werden und ein 3D-Bild der Probe erzeugt wird.

3. Verfahren nach Anspruch 1 oder 2, dadurch gekennzeichnet, dass die Gruppen (32, 33) mindestens eine zusätzliche ringförmig umgebende Gruppe aufweisen, wobei die ringförmigen Gruppen jeweils einen anderen Abstand zur zentralen Gruppe (32) haben.

4. Verfahren nach einem der Ansprüche 1 bis 3, dadurch gekennzeichnet, dass vier oder fünf Gruppen vorgesehen werden.

5. Verfahren nach einem der Ansprüche 1 bis 4, dadurch gekennzeichnet, dass jedes Pixel (31) in genau eine der Gruppen (32, 33) eingeteilt ist.

6. Mikroskop zur hochauflösenden Scanning-Mikroskopie einer Probe (P), das aufweist:

   - einen Beleuchtungsstrahlengang zur Beleuchtung der Probe (P) mit Beleuchtungsstrahlung (B) derart, dass die Beleuchtungsstrahlung an einem Punkt in oder auf der Probe (P) zu einem beugungsbegrenzten Beleuchtungsfleck (14) gebündelt wird,
   - einen Abbildungsstrahlengang zur beugungsbegrenzten Abbildung der Punkte in ein Beugungsbild (18) auf einen Pixel (31) aufweisenden Flächendetektor (17), wobei der Flächendetektor (17) durch seine Pixel (31) eine Ortsauflösung aufweist, die eine Beugungsstruktur (18a) des Beugungsbildes (18) auflöst,
   - eine Scaneinrichtung (10) zur Verschiebung des Punkts relativ zur Probe (P) in verschiedene Scanpositionen mit einer Schrittweite, die kleiner ist als der Durchmesser des Beleuchtungsflecks (14),
   - eine Auswerteeinrichtung (C) zum Erzeugen eines Bilds der Probe (P) aus den Daten des Flächendetektors (17) und den diesen Daten zugeordneten Scanpositionen, wobei das Bild eine Auflösung aufweist, die über eine Auflösungsgrenze der Abbildung gesteigert ist,

   **dadurch gekennzeichnet, dass**

   - die Pixel (31) des Flächendetektors (17) in Gruppen (32, 33) eingeteilt sind, die eine auf einer optischen Achse liegende, zentrale Gruppe (32) und eine weitere, die zentrale Gruppe (32) ringförmig umgebende Gruppe (33) aufweisen,
   - die Auswerteeinrichtung (C) ausgebildet ist, für jede Gruppe (32, 33) ein vorverrechnetes Rohbild zu berechnen,
   - die Auswerteeinrichtung weiter ausgebildet ist, die vorverrechneten Rohbilder zusammenzufassen und zu entfalten, um das Bild der Probe (P) zu erzeugen, und
   - die Auswerteeinrichtung (C) weiter ausgebildet ist, die vorverrechneten Rohbilder zu berechnen, indem für die jeweilige Gruppe (32, 33) eine zweidimensionale Entfaltung durchgeführt wird.

7. Mikroskop nach Anspruch 6, **dadurch gekennzeichnet, dass** die Auswerteeinrichtung (C) ausgebildet ist, die vorverrechneten Rohbilder dreidimensional zu entfalten, um das Bild der Probe (P) zu erzeugen.

8. Mikroskop nach Anspruch 6 oder 7, **dadurch gekennzeichnet, dass** die Gruppen (32, 33) mindestens eine zusätzliche ringförmig umgebende Gruppe aufweisen, wobei die ringförmigen Gruppen jeweils einen anderen Abstand zur zentralen Gruppe (32) haben.

9. Mikroskop nach einem der Ansprüche 6 bis 8, **dadurch gekennzeichnet, dass** vier oder fünf Gruppen (32, 33) vorgesehen sind.

10. Mikroskop nach einem der Ansprüche 6 bis 9, **dadurch gekennzeichnet, dass** jedes Pixel (31) in genau eine der Gruppen (32, 33) eingeteilt ist.

**Claims**

1. A method for high-resolution scanning microscopy of a sample (P), wherein

   - the sample (P) is illuminated with illumination radiation in such a way that the illumination radiation (B) is focused to a point in or on the sample (P) to form a diffraction-limited illumination spot (14),
   - the point is imaged in diffraction-limited fashion into a diffraction image (18) onto a 2D detector (17) having pixels (31), wherein, owing to its pixels (31), the 2D detector (17) has a spatial resolution that resolves a diffraction structure (18a) of the diffraction image (18),
   - the point is displaced relative to the sample (P) into different scanning positions with an increment less than the diameter of the illumination spot (14),
   - the 2D detector (17) is read, and an image of the sample (P) is generated from the data of the 2D detector (17) and from the scanning positions assigned to said data, said image having a resolution that is increased beyond a resolution limit for imaging,

   **characterized in that**

   - the pixels (31) of the 2D detector (17) are divided into groups (32, 33), which include a central group (32) located on an optical axis and a further group (33) that surrounds the central group (32) in ring-shaped fashion, and
- a pre-processed raw image is calculated for each group (32, 33),
- the pre-processed raw images are combined and deconvoluted to generate the image of the sample (P),
- wherein

-- the pre-processed raw images are calculated by a two-dimensional deconvolution being carried out for each group (32, 33), and/or
-- relative displacements of raw image signals contained in the data are calculated, the raw image signals are compensated with respect to displacement and the compensated raw image signals belonging to the same group are added to calculate a pre-processed raw image for this group.

2. The method as claimed in claim 1, **characterized in that** the pre-processed raw images are deconvoluted in three dimensions and a 3D image of the sample is generated.

3. The method as claimed in claim 1 or 2, **characterized in that** the groups (32, 33) include at least one additional ring-shaped surrounding group, wherein each ring-shaped group has an individual distance from the central group (32).

4. The method as claimed in any one of claims 1 to 3, **characterized in that** four or five groups are provided.

5. The method as claimed in any one of claims 1 to 4, **characterized in that** each pixel (31) is assigned to exactly one of the groups (32, 33).

6. A microscope for high-resolution scanning microscopy of a sample (P), comprising:

- an illumination beam path for illuminating the sample (P) with illumination radiation (B) in such a way that the illumination radiation is focused to a point in or on the sample (P) to form a diffraction-limited illumination spot (14),
- an imaging beam path for diffraction-limited imaging of the points into a diffraction image (18) onto a 2D detector (17) having pixels (31), wherein, owing to its pixels (31), the 2D detector (17) has a spatial resolution that resolves a diffraction structure (18a) of the diffraction image (18),
- a scanning device (10) for displacing the point relative to the sample (P) into different scanning positions with an increment less than the diameter of the illumination spot (14),
- an evaluation device (C) for generating an image of the sample (P) from the data of the 2D detector (17) and from the scanning positions assigned to said data, wherein the image has a resolution that is increased beyond a resolution limit of the image,

**characterized in that**

- the pixels (31) of the 2D detector (17) are divided into groups (32, 33), which include a central group (32) located on an optical axis and a further group (33) that surrounds the central group (32) in ring-shaped fashion, and
- the evaluation device (C) is configured to calculate a pre-processed raw image for each group (32, 33),
- the evaluation device is further configured to combine and deconvolute the pre-processed raw images in order to generate the image the sample (P), and
- the evaluation device (C) is further configured to calculate the respective pre-processed raw images by carrying out a two-dimensional deconvolution for the respective group (32, 33).

7. The microscope as claimed in claim 6, **characterized in that** the evaluation device (C) is configured to deconvolute the pre-processed raw images in three-dimensions in order to generate the image the sample (P).

8. The microscope as claimed in claim 6 or 7, **characterized in that** the groups (32, 33) include at least one additional ring-shaped surrounding group, wherein each ring-shaped group has an individual distance from the central group (32).

9. The microscope as claimed in any one of claims 6 to 8, **characterized in that** four or five groups (32, 33) are provided.

10. The microscope as claimed in any one of claim 6 to 9, **characterized in that** each pixel (31) is assigned to exactly one of the groups (32, 33).

**Revendications**

1. Procédé de microscopie à balayage à haute résolution d'un échantillon (P),

   - l'échantillon (P) étant éclairé par un rayonnement d'éclairage de manière à ce que le rayonnement d'éclairage (B) soit focalisé en un point dans ou sur l'échantillon (P) pour former une tache d'éclairage à diffraction limitée (14),
   - le point étant reproduit avec une diffraction limitée dans une image de diffraction (18) sur un détecteur de surface (17) comportant des pixels (31), le détecteur de surface (17) ayant une résolution locale due à ses pixels (31) qui restitue une structure de diffraction (18a) de l'image de diffraction (18),
   - le point étant déplacé par rapport à l'échantillon (P) dans différentes positions de balayage avec un incrément qui est inférieur au diamètre de la tache d'éclairage (14),
   - le détecteur de surface (17) étant lu et une image de l'échantillon (P) étant générée à partir des données du détecteur de surface (17) et des positions de balayage associées à ces données, laquelle image a une résolution qui est augmentée au-dessus d'une limite de résolution de la reproduction,

   **caractérisé en ce que**

   - les pixels (31) du détecteur de surface (17) sont classés en groupes (32, 33) qui comporte un groupe central (32) situé sur un axe optique et un autre groupe (33) entourant annulairement le groupe central (32),
   - une image brute pré-calculée est calculée pour chaque groupe (32, 33),
   - les images brutes pré-calculées sont combinées et étalées pour générer l'image de l'échantillon (P),

     -- les images brutes pré-calculées sont calculées par étalement bidimensionnel pour le groupe respectif (32, 33), et/ou
     -- les déplacements relatifs de signaux d'image bruts contenus dans les données étant calculés, le déplacement des signaux d'image bruts les uns par rapport aux autres étant compensés et les signaux d'image brute ainsi compensés, qui appartiennent à un groupe, étant additionnés pour calculer une image brute pré-calculée pour chaque groupe.

2. Procédé selon la revendication 1, **caractérisé en ce que** les images brutes pré-calculées sont étalées en trois dimensions et une image 3D de l'échantillon est générée.

3. Procédé selon la revendication 1 ou 2, **caractérisé en ce que** les groupes (32, 33) comportent au moins un groupe périphérique annulaire supplémentaire, les groupes annulaires étant chacun à une distance différente au groupe central (32).

4. Procédé selon l'une des revendications 1 à 3, **caractérisé en ce que** quatre ou cinq groupes sont prévus.

5. Procédé selon l'une des revendications 1 à 4, **caractérisé en ce que** chaque pixel (31) est classé dans exactement un des groupes (32, 33).

6. Microscope destiné à la microscopie à balayage à haute résolution d'un échantillon (P), ledit microscope comportant :

   - un trajet de faisceau d'éclairage destiné à éclairer l'échantillon (P) avec un rayonnement d'éclairage (B) de manière à ce que le rayonnement d'éclairage est focalisé en un point dans ou sur l'échantillon (P) afin de former une tache d'éclairage à diffraction limitée (14),
   - un trajet de faisceau de reproduction destiné à la reproduction à diffraction limitée des points dans une image de diffraction (18) sur un détecteur de zone (17) comportant des pixels (31), le détecteur de surface (17) ayant une résolution locale due à ses pixels (31) qui restitue une structure de diffraction (18a) de l'image de diffraction (18),
   - une unité de balayage (10) destinée à déplacer le point par rapport à l'échantillon (P) dans différentes positions de balayage avec un incrément qui et inférieur au diamètre de la tache d'éclairage (14),
   - une unité d'évaluation (C) destinée à générer une image de l'échantillon (P) à partir des données du détecteur de surface (17) et des positions de balayage associées à ces données, l'image ayant une résolution qui est augmentée au-delà d'une limite de résolution de la reproduction,

   **caractérisé en ce que**

- les pixels (31) du détecteur de surface (17) sont classés en groupes (32, 33) qui comporte un groupe central (32) situé sur un axe optique et un autre groupe (33) entourant annulairement le groupe central (32),
- l'unité d'évaluation (C) est conçue pour calculer une image brute pré-calculée pour chaque groupe (32, 33),
- l'unité d'évaluation est en outre conçue pour combiner et étaler les images brutes pré-calculées afin de générer l'image de l'échantillon (P), et
- l'unité d'évaluation (C) est en outre conçue pour calculer les images brutes pré-calculées par étalement bidimensionnel pour le groupe respectif (32, 33).

7. Microscope selon la revendication 6, **caractérisé en ce que** l'unité d'évaluation (C) est conçue pour étaler en trois dimensions les images brutes pré-calculées afin de générer l'image de l'échantillon (P).

8. Microscope selon la revendication 6 ou 7, **caractérisé en ce que** les groupes (32, 33) comportent au moins un groupe périphérique annulaire supplémentaire, les groupes annulaires étant chacun à une distance différente du groupe central (32).

9. Microscope selon l'une des revendications 6 à 8, **caractérisé en ce que** quatre ou cinq groupes (32, 33) sont prévus.

10. Microscope selon l'une des revendications 6 à 9, **caractérisé en ce que** chaque pixel (31) est classé en exactement un des groupes (32, 33).

20

6

10

8

7

15

23, 24, 25

17

B

B+D

D

9

16

18

11

12

18a

B+D

26

13

P

14

C

## Fig. 1

$h = 1$

Fig. 2a

$h = 1, 2 \ldots 32$

Fig. 2b

$I_h(\vec{r}, z)$

40

//32

140

$\tilde{O}(\vec{r}, z)$

42

//1

151

$DCV[D_h(\vec{r}, z), I_h(\vec{r}, z)]$

50

//32

141

PC

LSM

60

$D_h(\vec{r}, z)$

41

Fig. 3

Fig. 4

Fig. 5

Simulationsparameter: NA=1.4; n=1.518; PH=1.5 AU

Fig. 6a

Fig. 6b

Fig. 6c

Fig. 7

c = {1 ... 4}

h(1) = {1}
h(2) = {2 ... 7}
h(3) = {8 ... 19}
h(4) = {20 ... 32}

EP 3 692 409 B1

40

$I_h(\vec{r},z)$

//32

54

$\tilde{I}_c(\vec{r},z)$
$I2D_h(\vec{r})$

//4

154b

//32

154a

$D_h(\vec{r},z)$

//32

141

41

$\tilde{D}_c(\vec{r},z) =$
$DCV2D\left[D_{h(c)}(\vec{r},z), I2D_{h(c)}(\vec{r})\right]$

55

//4

155

$DCV\left[\tilde{D}_c(\vec{r},z), \tilde{I}_c(\vec{r},z)\right]$

50c

//1

$\tilde{O}(\vec{r},z)$

42

LSM | PC

Fig. 8

$I_h(\vec{r}, z)$  ·40

$\vec{s}_h$  ·51

//32

$\tilde{I}_c(\vec{r}) = \sum_{h(c)} I_h(\vec{r} - \vec{s}_h, z)$  ·52a

//32

//4

151

$D_h(\vec{r}, z)$  ·41

//32

141

$\widetilde{D}_c(\vec{r}, z) = \sum_{h(c)} D_h(\vec{r} - \vec{s}_h, z)$  ·53a

//4

153a

$$\tilde{O}(\vec{k}_r, k_z) = \frac{\sum_c \widetilde{D}_c(\vec{k}_r, k_z)\tilde{I}_c^*(\vec{k}_r, k_z)}{\sum_c \left|\tilde{I}_c^*(\vec{k}_r, k_z)\right|^2 + w}$$  ·50d

//1

$\tilde{O}(\vec{r}, z)$  ·42

60

LSM  ¦  PC

Fig. 9

Fig. 10a

Fig. 10b

Fig. 10c

Simulationsparameter: NA=1.4; n=1.518; PH=1.5 AU

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2317362 A1